# EUROPÄISCHE PATENTANMELDUNG

(11) **EP 1 020 589 A2**
(43) Veröffentlichungstag der Anmeldung: **19.07.2000**
(21) Anmeldenummer: 99122989.9
(22) Anmeldetag: 19.11.1999
(51) Int. Cl.: E04F 15/10, B29C 45/14

(54) **Belagelement und Verfahren zu dessen Herstellung**

(30) Priorität: 13.01.1999 DE 19901022
(71) Anmelder: STRÖHER GmbH, D-35683 Dillenburg (DE)
(72) Erfinder: Klein, Michael, 35685 Dillenburg (DE)
(74) Vertreter: Maser, Jochen, Dipl.-Ing.

(57) **Zusammenfassung**

Die Erfindung betrifft ein Belagelement und ein Verfahren zu dessen Herstellung. Das Belagelement (11) besteht aus einer Fliese (14) und einer an einer Unterseite angeordneten Trägerschicht (16), wobei die aus einem Polykondensationskunststoff oder Polyadditionskunststoff ausgebildeten Trägerschicht (16) mit einer Oberfläche der Unterseite (17) der Fliese (14) verbunden ist.

## Beschreibung

Die Erfindung betrifft ein Belagelement gemäß dem Oberbegriff des Anspruchs 1 und ein Verfahren gemäß dem Oberbegriff des Anspruchs 14.

Aus der EP 0 239 042 B1 ist ein Belagelement für einen Bodenbelag bekannt geworden, welches aus einer keramischen Fliese und einer an deren Unterseite angeklebten oder anvulkanisierten Unterlage aus Gummi besteht. Derartige Belagelemente werden für Bodenbeläge auf Terrassen, Balkone, Loggien in Neubauten sowie für Sanierungen eingesetzt.

Zur Herstellung dieses Belagelements wird auf einer Unterseite der Keramikfliese eine haftvermittelnde Schicht aufgetragen, um die Unterlage aus Gummi mit der Fliese zu verkleben. Derartige Fliesen weisen den Nachteil auf, daß der Haftverbund zwischen der Unterlage aus Gummi und der Keramikfliese von kurzer Dauer ist. Insbesondere durch eindringende Feuchtigkeit oder bei einem Frost/TauWechsel kann ein Lösen der Unterlage aus Gummi von der Fliese auftreten. Des weiteren weist die Fliese den Nachteil auf, daß ein zusätzlicher Arbeitsschritt für das Auftragen der haftvermittelnden Schicht erforderlich ist. Darüber hinaus sind derartige Belagelemente relativ schwer und in der Gesamthöhe hoch, damit die Unterlage aus Gummi die Anforderungen wie Trittschalldämmung, Wärmedämmung als auch geringe federnde Nachgiebigkeit erfüllt.

Der Erfindung liegt deshalb die Aufgabe zugrunde, ein Belagelement zu schaffen, welches eine dauerhafte Verbindung zwischen einer Fliese und einer Trägerschicht aufweist, welches leicht und in der Bauhöhe niedrig ist und sowie eine einfache und kostengünstige Herstellung ermöglicht.

Diese Aufgabe wird erfindungsgemäß durch ein Belagelement gemäß Anspruch 1 und ein Verfahren zu dessen Herstellung gemäß Anspruch 14 gelöst.

Durch den Einsatz von einem Polyadditionskunststoff oder einem Polykondensationskunststoff als Trägerschicht einer Fliese, welche unmittelbar mit der Unterseite der Fliese verbunden ist, kann eine dauerhafte Haftverbindung zwischen der Trägerschicht und der Fliese ohne einen Zusatz einer haftungsvermittelnden Schicht ermöglicht sein. Erstaunlicherweise wurde herausgefunden, daß aufgrund einer Reaktion auf der Oberfläche der Fliese mit einem Polykondensations- oder Polyadditionskunststoff eine dauerhafte und feste Verbindung geschaffen werden kann, was auf die freien OH-Gruppen an der Oberfläche der Fliese zurückzuführen sein dürfte, welche mit dem Kunststoff reagieren.

Des weiteren weist das erfindungsgemäße Belagelement den Vorteil auf, daß durch die Ausbildung der Trägerschicht aus einem Polykondensations- oder Polyadditionskunststoff ein einfaches Bearbeiten des Belagelementes beim Verlegen gegeben sein kann. Dieses erfindungsgemäße Belagelement kann mittels einer Naßschleifmaschine oder eines Trennschleifers auf Maß geschnitten werden. Dies ist beispielsweise bei der Fliese aus dem Eingangs genannten Stand der Technik nicht möglich.

Nach einer vorteilhaften Ausgestaltung der Erfindung ist vorgesehen, daß als Polyadditionskunststoff ein Polyurethanschaumstoff, vorzugsweise ein halbharter Integralschaumstoff, verwendet wird. Dieser eignet sich besonders als Trägerschicht. Gleichzeitig erfüllen Polyadditionskunststoffe die Aufgabe wie Wärmedämmung und Trittschalldämmung. Darüber hinaus sind diese witterungsbeständig, wobei vorzugsweise UV-Stabilisatoren oder weitere Zusätze hinzugegeben werden können.

Nach einer weiteren vorteilhaften Ausgestaltung der Erfindung ist vorgesehen, daß die Trägerschicht eine geschlossene Außenhaut und vorzugsweise geschlossenzellig ausgebildet ist. Dadurch kann ein Eindringen von Feuchtigkeit und ein Aufquellen des Kunststoffes vermieden werden.

Des weiteren ist vorteilhafterweise vorgesehen, daß die Trägerschicht, insbesondere der Polyurethanschaum, verdichtet ist, wodurch erzielt werden kann, daß die Trittfestigkeit und Belastung aufgenommen werden kann. Des weiteren kann durch die vorteilhafte Auswahl der Trägerschicht ermöglicht sein, daß ein Belagelement mit geringer Bauhöhe ausgebildet werden kann, da bereits eine geringere Schichtdicke der Trägerschicht ausreicht, um den Anforderungen derartiger Belagelemente zu genügen. Gleichzeitig kann dadurch ein geringes Gesamtgewicht des Belagelementes erzielt werden. Vergleichsweise ist eine Trägerschicht aus einem geschäumtem Kunststoff erheblich leichter als eine Unterlage aus Gummi.

Nach einer weiteren vorteilhaften Ausgestaltung der Erfindung ist vorgesehen, daß die Trägerschicht vollflächig an der Unterseite der Fliese vorgesehen ist und gegenüber einem Außenbereich der Fliese geringfügig zurückspringt. Dadurch kann ein einfaches und schnelles Verlegen der Belagelemente auch ohne Fugenabstand gegeben sein. Des weiteren kann die Trägerschicht auf einer betragsmäßig sehr großen Fläche an der Unterseite angreifen und die Fliese abstützen.

Vorteilhafterweise ist vorgesehen, daß die Trägerschicht auf der Unterseite Noppen zur Bildung eines Hohlraumes aufweist. Dadurch kann eine Drainage zum Abfließen von Regenwasser oder dergleichen gegeben sein.

Nach einer weiteren vorteilhaften Ausgestaltung der Erfindung ist vorgesehen, daß der thermische Längenausdehnungskoeffizient der Trägerschicht sehr gering ausgebildet ist. Dadurch kann ermöglicht sein, daß sich die Trägerschicht im wesentlichen an den Expansionskoeffizienten der Fliese anpaßt, wodurch vorteilhafterweise erzielt werden kann, daß keinerlei Scher- oder Schubspannungen zwischen der Trägerschicht und der Fliese auftreten können, wodurch der feste Haftverbund aufrechterhalten werden kann. Dadurch kann die Lebensdauer eines Belagelementes erhöht werden, da bei unterschiedlichen Temperaturen keine Druck-, Zug- oder Biegebeanspruchungen bzw. Aufschüsselungen an der Fliese auftreten, welche durch unterschiedliche Ausdehnungskoeffizienten hervorgerufen werden können.

Das erfindungsgemäße Belagelement ist bevorzugt aus einer Keramikfliese und aus einem PUR-Schaumstoff hergestellt. Eine derartige Materialkombination hat sich als besonders vorteilhaft gezeigt. Das Fliesenmaterial kann alternativ aus Kunststein, Naturstein oder dergleichen ausgebildet sein.

Das erfindungsgemäße Verfahren zur Herstellung eines Belagelementes weist den Vorteil auf, daß in einem Arbeitsgang und mittels kurzen Taktzeiten ein Belagelement hergestellt werden kann, welches einen dauerhaften Haftverbund zwischen einer Fliese und einer mit der Unterseite verbundenen Trägerschicht aufweist. Darüber hinaus weist das erfindungsgemäße Verfahren den Vorteil auf, daß durch die Ausbildung der Trägerschicht aus einem Polyadditions- oder Polykondensationskunststoff unabhängig von der Stärke der Fliese immer ein Belagelement mit gleicher Bauhöhe hergestellt werden kann. Durch das unmittelbare Aufbringen der Trägerschicht auf die Fliese kann die Höhendifferenz ausgeglichen werden. Ein durch die erfindungsgemäß hergestellten Belagelemente verlegter Bodenbelag weist somit eine ebene Belagfläche auf.

Nach einer weiteren vorteilhaften Ausgestaltung des Verfahrens ist vorgesehen, daß der als Polyadditionskunststoff vorgesehene Polyurethanschaum, vorzugsweise ein halbharter Integralschaum, unter hohem Druck eingespritzt wird. Hierbei sind vorteilhafterweise Drücke vorgesehen, die in Bereichen zwischen 60 und 100 bar liegen können, wobei anwendungsspezifisch höhere oder niedrigere Drücke gefahren werden können. Dadurch kann eine hochverdichtete Trägerschicht hergestellt werden, die gleichzeitig vorteilhafterweise geschlossenzellig ausgebildet ist.

Nach einer weiteren vorteilhaften Ausgestaltung ist vorgesehen, daß eine Werkzeugform auf eine Temperatur unter 100 ° beheizt wird. Dadurch kann eine Erhöhung der Taktzeit durch einen schnelleren Aushärteprozeß der Trägerschicht gegeben sein.

Weitere vorteilhafte Ausgestaltungen und Weiterbildungen der Erfindung sind in den weiteren Ansprüchen angegeben.

Anhand der Zeichnung wird nachfolgend ein bevorzugtes Ausführungsbeispiel der Erfindung beschreiben. Es zeigen:
- Fig. 1: eine schematische Teilansicht eines Bodenbelages mit erfindungsgemäßen Belagelementen,
- Fig. 2: eine Unteransicht des erfindungsgemäßen Belagelementes gemäß Fig. 1,
- Fig. 3: eine perspektivische Ansicht eines Verbindungselementes von zumindest zwei zueinander benachbarten Belagelementen,
- Fig. 4: eine schematische Seitenansicht von zwei Belagelementen ohne Fugenabstand,
- Fig. 5: eine schematische Seitenansicht zweier mit Fugenabstand zueinander angeordneten Belagelemente und
- Fig. 6: eine schematische Schnittdarstellung eines Werkzeuges zur Durchführung des erfindungsgemäßen Verfahrens.

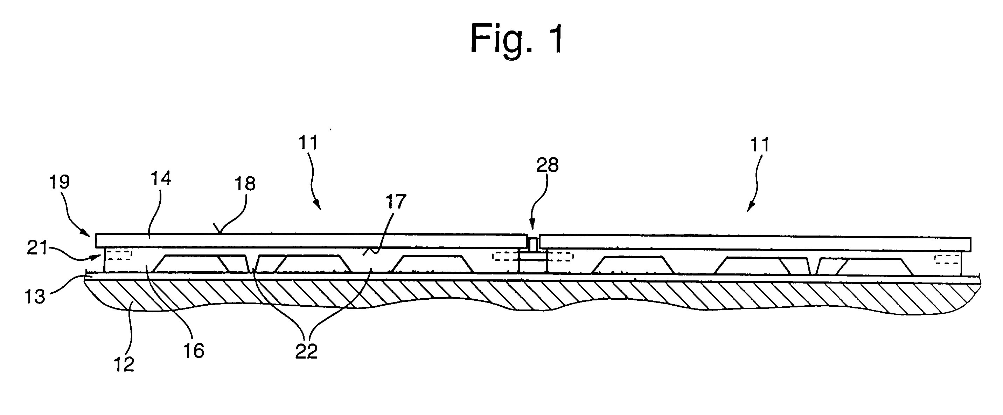

In Fig. 1 ist ein Belagelement 11 dargestellt, welches für die Bildung eines Bodenbelages auf einer Terrasse, einem Balkon oder dergleichen vorgesehen ist. Auf beispielsweise einem Terrassenboden 12 ist eine vorzugsweise aus Kunststoff ausgebildete Nivellierschicht 13, beispielsweise einer Kunststoffolie, vorgesehen und bildet eine abdichtende Unterlage für das Belagelement 11. Weitere anwendungsbedingte Schichten können ebenfalls vorgesehen sein, um eine Unterlage auszubilden. Ebenso kann eine Verlegung im Kiesbett denkbar sein.

Das Belagelement 11 besteht aus einer Fliese 14 und einer Trägerschicht 16, welche mit einer Unterseite 17 der Fliese 14 verbunden ist. Eine Oberseite 18 der Fliese 14 ist unter ästhetischen Gesichtspunkten ausgebildet.

Die Trägerschicht 16 besteht aus einem Polyadditionskunststoff, wie beispielsweise Polyurethan, Polyhamstoff oder Polykondensationskunststoff, wie Polyester, Polyamid, Phenoplast, Aminoplast, Epoxidharz oder Silikon. Bevorzugt ist die Trägerschicht 16 aus einem geschäumten Polyurethan hergestellt, vorzugsweise einem halbharten Integralschaum, der unmittelbar mit einer Unterseite 17 einer Keramikfliese 14 verbunden ist.

Die Unterseite 17 der Fliese 14 ist unbehandelt und weist vorteilhafterweise keine Glasur auf. Die nach dem Brennen einer Keramikfliese entstehende Oberfläche ist geeignet einen dauerhaften Haftverbund mit dem halbharten Integralschaum einzugehen. Bei diesen oder anderen Materialien der Fliese 14 kann ggf. eine Vorbehandlung der Unterseite von Vorteil sein, damit der hohe Haftverbund mit der Trägerschicht ermöglicht ist. Die Trägerschicht 16, insbesondere der halbharte Integralschaum, weist den Vorteil auf, daß eine hinreichende Festigkeit der Trägerschicht 16 für die Trittfestigkeit gegeben sein kann. Darüber hinaus ist dieser Werkstoff nicht zu spröde und auch nicht zu fest, um die zumeist aus Kunststoff oder Teer ausgebildete dichtende Schicht auf der Unterlage zu beschädigen.

Des weiteren kann ein starker Haftverbund selbst bei einer geringen Wasseraufnahme von ungefähr weniger als 1 % eine gute Verkrallung der Trägerschicht 16 mit der Oberfläche der Unterseite 17 der Fliese 14 erfolgen. Selbst bei Feinsteinzeugfliesen ist ein starker Haftverbund gegeben. Je geringer die Wasseraufnahme einer Fliese ist, desto geringer ist die Porenstruktur.

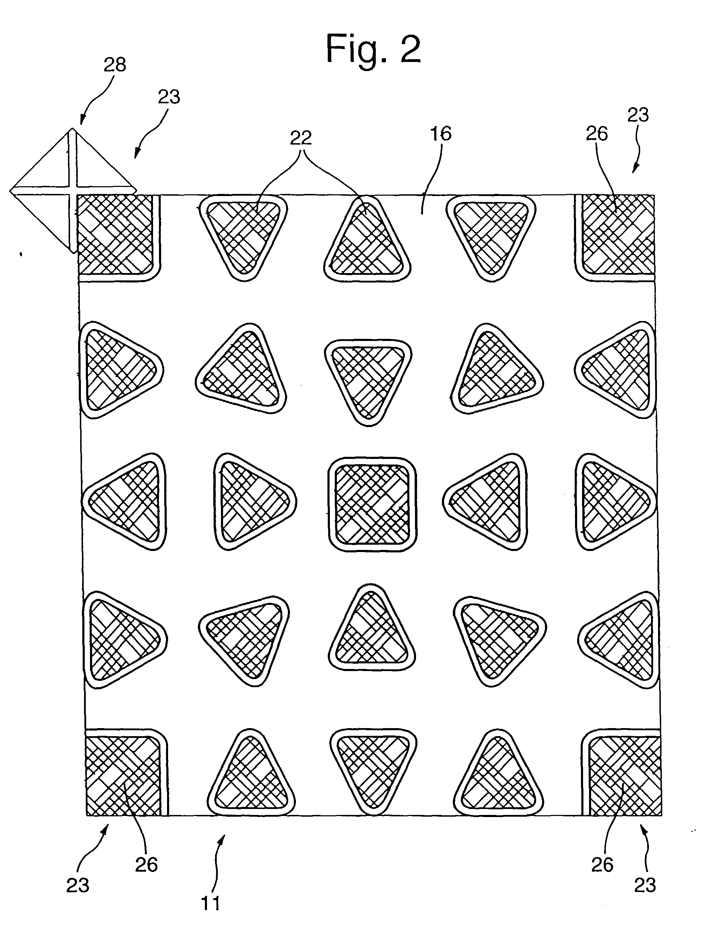

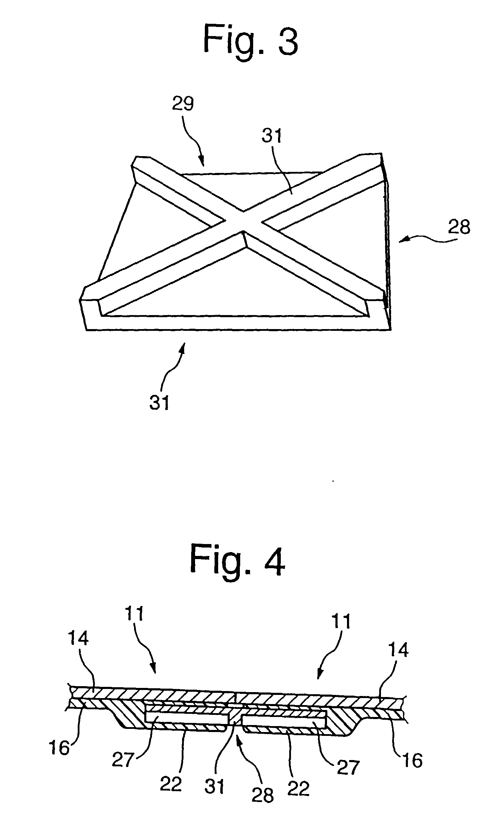

Die Trägerschicht 16 liegt im wesentlichen vollflächig an der Unterseite 17 der Fliese 14 an, wobei ein Außenrandbereich 19 der Fliese 14 vorgesehen ist, der frei von einer Trägerschicht 16 ist. Ein dadurch gebildeter Rückspruch 21 weist den Vorteil auf, daß ein bündiges Aneinanderliegen der Fliese 14 beim Verlegen der Belagelemente 11 ohne Fugen gegeben sein kann, wie dies beispielsweise näher in Fig. 4 dargestellt ist. Die Trägerschicht 16 weist des weiteren Noppen 22 auf, die zur Bildung von Hohlräumen zur Unterlage 12 vorgesehen ist und ermöglicht, daß eine Drainage gegeben ist. Die Noppen 22 können gemäß Fig. 2 dreieckförmige oder quadratische, runde oder andere Geometrien aufweisen. Bei allen Geometrien ist vorgesehen, daß diese von ihrer Auflagefläche eine Schräge zur durchgehenden Schicht aufweisen, welche zur einfacheren Entformung aus einem Werkzeug dient. Vorteilhafterweise kann vorgesehen sein, daß die Auflagefläche der Noppen 22 Verstärkungen oder Versteifungen oder Schutzkappen oder dergleichen aufweisen.

Des weiteren kann vorgesehen sein, daß die Trägerschicht 16 Einlagen, wie beispielsweise Matten, Gewebe, Gewirke oder dergleichen aufweist. Diese können zur Verstärkung der Trägerschicht 16 dienen. Beispielsweise können diese aus Kunststoffasern oder metallischen Fäden ausgebildet sein. Die Gesamtbauhöhe des Belagelementes 11, die beispielsweise nur 25 mm betragen kann, wird durch die Plattenstärke der Fliese 14 und der Dicke der Trägerschicht 16 bestimmt. Bei der Trägerschicht 16 ist vorteilhafterweise vorgesehen, daß die Dicke der durchgehenden Schicht und die Höhe der Noppen 22 im wesentlichen gleich ausgebildet sind. Bei Anwendungsfällen, welche geringere Anforderungen an die Drainage aufweisen, können die Noppen 22 auch kleiner ausgebildet sein oder eine größere Auflagefläche einnehmen.

Die erfindungsgemäßen Belagelemente 11 weisen des weiteren ein geringes Gewicht auf und können beispielsweise 25 kg/m² betragen. Des weiteren können die erfindungsgemäßen Belagelemente 11 ohne Entsorgen des alten Belages oder z. B. Balkonaufbaus verlegt werden.

In Fig. 2 ist eine Unterseite des Belagelementes 11 dargestellt. Die in Eckbereichen 23 angeordneten Noppen 26 können von der dargestellten Geometrie abweichend ausgebildet sein. Die Noppen 26 weisen einen diagonal über den Eckbereich 23 verlaufenden Schlitz 27 auf, welcher zur Aufnahme eines Verbindungselementes 28 dient. Das Verbindungselement 28 dient zur Positionierung und Fixierung beispielsweise weiterer Belagelemente 11 zueinander und ist wie in Fig. 2 oben links dargestellt in dem Schlitz 27 angeordnet. Dadurch ist ein Anschluß von drei weiteren Belagelementen 11 gegeben.

Das Verbindungselement 28 ist in Fig. 3 perspektivisch dargestellt und weist auf einer Oberseite 29 ein Fugenkreuz 31 auf. Auf der gegenüberliegenden Unterseite 32 ist die Fläche plan ausgebildet. Das Verbindungselement 28, welches eine Verlegehilfe darstellt, ist als Kunststoffspritzgußteil, beispielsweise aus Polyurethan, hergestellt.

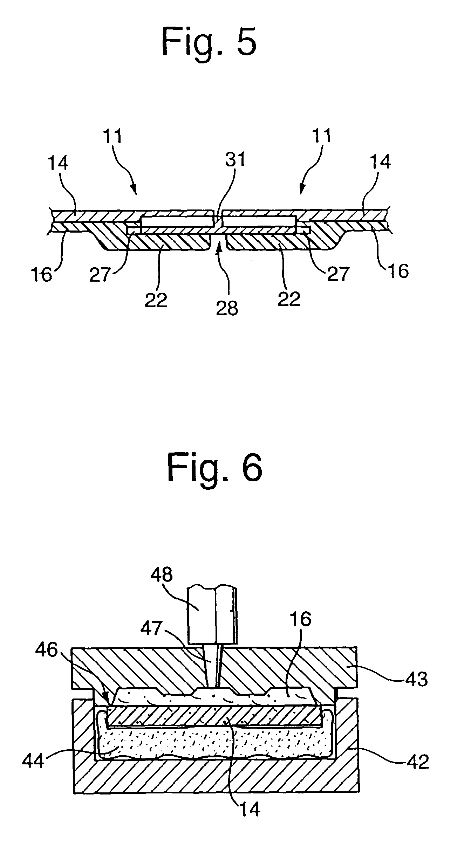

In den Figuren 4 und 5 ist aufgezeigt, daß das Verbindungselement 28 sowohl zum Verlegen der Belagelemente 11 ohne Fuge (Fig. 4) als auch mit einem Fugenabstand (Fig. 5) einsetzbar ist. Beim Verlegen Stoß auf Stoß wird das Verbindungselement 28 mit dem Fugenkreuz 31 nach unten weisend in den Schlitzen 27 angeordnet. Die Tiefe des Schlitzes 27 ist dabei derart vorgesehen, daß das Verbindungselement 28 in seiner eingesetzten Position aufgenommen werden kann.

Vorteilhafterweise kann die Schlitztiefe derart bemessen sein, daß ein geringer Luftspalt zwischen den Fliesen 14 der Belagelemente 11 ausgebildet ist.

In Fig. 5 ist das Verbindungselement 28 mit dem Fliesenkreuz 31 nach oben weisend angeordnet, wobei die Höhe der Stege des Fliesenkreuzes 31 derart ausgebildet sind, daß diese zumindest teilweise an einer Seitenfläche der Fliese 14 anliegen und die Fliesen 14 auf Abstand halten können. Durch die Steckverbindung des Verbindungselementes 28 mit den Belagelementen 11 kann der Bodenbelag problemlos zur Reinigung oder Abdichtung des Untergrunds aufgenommen und anschließend wieder einfach verlegt werden. Vorteilhafterweise sind keine Verlegehilfsstoffe, wie Stelzlager, Teerringe oder Abstandhalter erforderlich.

In Fig. 6 ist ein schematischer Querschnitt eines Werkzeuges 41 zur Herstellung des erfindungsgemäßen Belagelementes 11 dargestellt. Das Werkzeug 41 weist eine untere Hälfte 42 auf, welche von einer oberen Hälfte 43 geschlossen wird. In der unteren Hälfte 42 ist ein Kissen 44 vorgesehen, welches zur Aufnahme der Fliese 14 dient. Diese wird mit der Oberseite 18 auf das Kissen 44 weisend in die untere Formhälfte 42 eingelegt. Das Kissen 44 ist eine nachgiebige Masse, welche druck- und hitzebeständig ist. Vorteilhafterweise ist vorgesehen, daß das Kissen 44 aus einer Silikonmasse besteht. Dieses Kissen 44 weist den Vorteil auf, daß ggf. Unebenheiten auf der Oberseite 18 der Fliese 14 bzw. auch strukturbedingte Unebenheiten während des Herstellungsprozesses der Trägerschicht ausgeglichen werden können. Dadurch kann ein Springen oder Platzen der Fliese 14 während des Einspritzens des Kunststoffes in das Werkzeug 41 verhindert werden. Des weiteren weist das Kissen 44 den Vorteil auf, daß die Außenrandbereiche 19 der Fliese 14 umfaßt werden, so daß gleichzeitig eine Abdichtung und Begrenzung der auf die Unterseite der Fliese 14 aufgeschäumten Trägerschicht gegeben ist. Somit kann eine Nacharbeit von ggf. an Seitenflächen der Fliese 14 anhaftender Trägerschicht vermieden werden.

Die obere Formhälfte 43 weist eine Negativform von einer Unterseite der Trägerschicht 16 auf. Nach dem Einlegen der Fliese 14 wird das Werkzeug 41 geschlossen. Vorteilhafterweise liegt eine Schulter 46 der oberen Werkzeughälfte 43 auf der Unterseite der Fliese 14 auf, wodurch der Rücksprung 21 ausgebildet sein kann. An einer Außenseite der Werkzeughälfte 43 ist ein Hochdruckmischkopf 48 vorgesehen, der über einen Anguß 47 unter hohem Druck, beispielsweise 60 bis 100 bar, den plastifizierten Kunststoff in einen zwischen die Fliese 14 und oberer Werkzeug hälfte 43 gebildeten Hohlraum einspritzt. Nach dem Einspritzen des Kunststoffes in das vorbeheizte Werkzeug 41, welches eine Temperatur von unter 100 ° aufweist, wird die Werkzeugform 41 geschlossen gehalten, damit die Trägerschicht 16 aushärten kann. Bei einem halbharten Integralschaum ist die Aushärtedauer beispielsweise zwischen zwei bis fünf Minuten bevor das Werkzeug 41 geöffnet und das fertige Belagelement 11 aus der Werkzeugform entnommen werden kann. Bei der Trägerschicht 16 ist vorteilhafterweise ein Schaumgewicht von 500 bis 1000 g/l vorgesehen. Die Trägerschicht 16 ist derart eingestellt, daß eine geschlossenzellige und verdichtete Schaumstoffschicht ausgebildet werden kann, welche eine geschlossene Außenhaut aufweist.

Durch das beheizte Werkzeug 41 kann gleichzeitig eine Vorwärmung der Fliese 14 vorgesehen sein, wodurch der Reaktionsprozeß zwischen der Trägerschicht 16 und der Oberfläche der Unterseite 17 der Fliese 14 begünstigt werden kann.

Von Hochdruckmischkopf 48 können mehrere Werkzeuge 41 bedient werden, so daß mehrere Belagelemente 11 gleichzeitig hergestellt werden können. Ebenso können mehrere Fliesen 14 in einer Werkzeughälfte zum Aufbringen einer Trägerschicht 16 vorgesehen sein.

Nachdem die Trägerschicht 16 ausgehärtet ist, wird das Belagelement 11 aus der Werkzeughälfte 42 entnommen. Das Einbringen des Schlitzes 27 in die im Eckbereich 23 angeordneten Noppen 26 kann durch Schieber im Werkzeug erfolgt sein. Alternativ können diese Schlitze 27 nachträglich auch manuell eingebracht werden.

## Patentansprüche

1. Belagelement bestehend aus einer Fliese (14) und einer an einer Unterseite (17) angeordneten Trägerschicht (16), dadurch gekennzeichnet, daß die aus einem Polykondensationskunststoff oder Polyadditionskunststoff ausgebildeten Trägerschicht (16) mit einer Oberfläche der Unterseite (17) der Fliese (14) verbunden ist.

2. Belagelement nach Anspruch 1, dadurch gekennzeichnet, daß als Polyadditionskunststoff ein Polyurethanschaumstoff, vorzugsweise ein halbharter Integralschaum, vorgesehen ist.

3. Belagelement nach Anspruch 1 oder 2 , dadurch gekennzeichnet, daß die Trägerschicht (16) eine geschlossene Außenhaut und vorzugsweise geschlossenzellig ausgebildet ist.

4. Belagelement nach einem der vorhergehenden Ansprüche, dadurch gekennzeichnet, daß die Trägerschicht (16) verdichtet ist.

5. Belagelement nach einem der vorhergehenden Ansprüche dadurch gekennzeichnet, daß die Trägerschicht (16) vollflächig an der Unterseite (17) der Fliese(14) vorgesehen ist und gegenüber den Außenbereichen (19) der Fliese (14) geringfügig zurückspringt.

6. Belagelement nach einem der vorhergehenden Ansprüche, dadurch gekennzeichnet, daß auf der Unterseite (17) der Trägerschicht (16) Noppen (22, 26) zur Bildung von Hohlräumen vorgesehen sind.

7. Vorrichtung nach einem der vorhergehenden Ansprüche, dadurch gekennzeichnet, daß der Längenausdehnungskoeffizient der Trägerschicht (16) an den der Fliese (14) anpaßbar ist.

8. Belagelement nach einem der vorhergehenden Ansprüche, dadurch gekennzeichnet, daß die Trägerschicht (16) ein Schaumgewicht vom 500 bis 1000 g/l aufweist.

9. Belagelement nach einem der vorhergehenden Ansprüche, dadurch gekennzeichnet, daß die Fliese (14) aus keramischem Material ausgebildet ist.

10. Belagelement nach Anspruch 1, dadurch gekennzeichnet, daß die Trägerschicht (16) in Eckbereichen (23) der Fliese (14) jeweils eine Noppe (26) aufweist, in der ein Schlitz (27) zur Aufnahme eines Verbindungselementes (28) eingebracht ist.

11. Belagelement nach Anspruch 10, dadurch gekennzeichnet, daß das plattenförmige Verbindungselement (28) quadratisch ausgebildet ist und auf einer Unterseite (32) plan ausgebildet ist und auf der gegenüberliegenden Oberseite (29) ein Fugenkreuz (31) aufweist.

12. Belagelement nach Anspruch 10 oder 11, dadurch gekennzeichnet, daß ein Schlitzgrund des Schlitzes (27) diagonal über den Eckbereich (23) verläuft und die Schlitztiefe vom Eckpunkt (23) aus gesehen wenigstens die Hälfte einer Kantenlänge des Verbindungselementes (28) umfaßt.

13. Belagelement nach einem der Ansprüche 10 bis 12, dadurch gekennzeichnet, daß das Verbindungselement (28) einerseits mit dem Fugenkreuz (31) zur Sichtseite der Fliesen (14) weisend und eine Fuge zwischen den Fliesen (14) bildend und andererseits zur Unterlage der Fliese (14) weisend und die Fliesen (14) bündig aneinanderliegend in dem Schlitz (27) anordenbar ist.

14. Verfahren zur Herstellung eines Belagelementes (11) bestehend aus einer Fliese (14) und einer auf einer Unterseite (17) der Fliese (14) angeordneten Trägerschicht (16), dadurch gekennzeichnet, daß eine Fliese (14) mit einer Oberseite (18) in eine Werkzeughälfte (42) eines Werkzeuges (41) eingelegt wird, daß das Werkzeug (41) geschlossen wird und daß eine Trägerschicht (16) aus einem Polyadditionskunststoff oder Polykondensationskunststoff in das Werkzeug (41) eingespritzt wird.

15. Verfahren nach Anspruch 14, dadurch gekennzeichnet, daß die Trägerschicht (16) mit hohem Druck, vorzugsweise zwischen 80 und 100 bar, eingespritzt wird.

16. Verfahren nach Anspruch 14 oder 15, dadurch gekennzeichnet, daß das Werkzeug (41) auf eine Temperatur unter 100 ° beheizt wird.

17. Verfahren nach einem der Ansprüche 14 bis 16, dadurch gekennzeichnet, daß nach dem Einspritzen der Trägerschicht (16) das Werkzeug (41) während einer Aushärtephase der Trägerschicht (16), vorzugsweise mit zusätzlichem Druck, geschlossen gehalten wird.

18. Verfahren nach einem der Ansprüche 14 bis 17, dadurch gekennzeichnet, daß die Fliese (14) in ein nachgiebiges und dichtendes, vorzugsweise wärmebeständiges, Kissen (44), welches in einer Werkzeughälfte (42) angeordnet ist, eingelegt wird.

19. Verfahren nach Anspruch 18, dadurch gekennzeichnet, daß das Kissen (44) aus einer Silikonmasse hergestellt wird.

20. Verfahren nach Anspruch 18, dadurch gekennzeichnet, daß durch das Kissen (44) die zumindest eine Fliese (14) an den Seitenkanten abgedeckt wird.
